# DEMANDE DE BREVET EUROPEEN

(11) **EP 4 530 498 A1**
(43) Date de publication de la demande: **02.04.2025**
(21) Numéro de dépôt: 24182876.3
(22) Date de dépôt: 18.06.2024
(51) Int. Cl.: F16H 57/00

(54) **SYSTÈME DE TRANSMISSION MÉCANIQUE DE PUISSANCE, BOITE DE TRANSMISSION DE PUISSANCE ET AERONEF**

(30) Priorité: 27.09.2023 FR 2310240
(71) Demandeur: Airbus Helicopters, 13725 Marignane Cedex (FR)
(72) Inventeur: ZAMPONI, Laurent, 13127 VITROLLES (FR); BINDER, Félix, 13820 ENSUES LA REDONNE (FR)
(74) Mandataire: GPI Brevets

(57) **Abrégé**

Le système de transmission (10) selon l'invention comprend un arbre menant (1), un arbre mené (2) et un dispositif de liaison (3) permettant audit arbre menant (1) de transmettre un couple mécanique audit arbre mené (2), ainsi que des dispositifs de guidage (5,6,7,8) guidant en rotation ledit arbre menant (1) autour d'un axe menant (AXMA) et ledit arbre mené (2) autour d'un axe mené (AXME). Lorsque ledit système de transmission (10) est à l'arrêt, ledit axe menant (AXMA) et ledit axe mené (AXME) sont désalignés, et se rapprochent l'un de l'autre lorsque ledit système de transmission (10) transmet un couple dudit arbre menant (1) vers ledit arbre mené (2).

## Description

La présente invention se situe dans le domaine des dispositifs de transmission de puissance.

La présente invention concerne un système de transmission, une boîte de transmission de puissance et un aéronef, ainsi qu'une méthode de limitation des efforts parasites dans un tel système de transmission. En particulier, un système de transmission peut avoir pour fonction de transmettre mécaniquement une puissance entre un moteur et un rotor d'un aéronef.

Un système de transmission connu comporte un dispositif de liaison transférant un mouvement de rotation ainsi qu'un couple mécanique d'un arbre menant vers un arbre mené. De plus, le système de transmission peut comporter un ou plusieurs dispositifs de guidage pour guider en rotation l'arbre menant et l'arbre mené par rapport à un support. De tels dispositifs de guidage peuvent comprendre, par exemple, des roulements à billes ou à rouleaux. Par ailleurs, l'arbre menant et l'arbre mené sont alignés et coaxiaux.

Cependant, sous certaines conditions de fonctionnement du système de transmission, l'arbre menant et l'arbre mené peuvent être soumis à des charges radiales, voire axiales, importantes susceptibles de provoquer des déformations et déplacements générant un désalignement radial et/ou angulaire entre eux. Un tel désalignement peut tendre à générer des efforts parasites dans le système de transmission de puissance susceptibles de créer une usure et/ou un endommagement du dispositif de liaison et/ou des dispositifs de guidage, voire de l'arbre menant et/ou de l'arbre mené.

Pour au moins limiter la transmission d'efforts parasites entre les arbres menant et mené, diverses solutions ont été développées.

Par exemple, le document FR 3057850 décrit un système de transmission comprenant un premier et un deuxième arbres solidarisés respectivement à deux moyens d'accouplement. Ce système de transmission comporte aussi un système de liaison, dit « souple », comportant au moins un arbre intermédiaire reliant les deux moyens d'accouplement, et traversant longitudinalement le deuxième arbre.

De plus, la longueur de l'arbre intermédiaire peut être maximisée, afin de minimiser l'effet d'un désalignement éventuel entre le premier arbre et le deuxième arbre. En effet, plus l'arbre intermédiaire est long, moins les efforts parasites générés par un désalignement donné entre le premier arbre et le deuxième arbre sont importants.

De manière complémentaire ou alternative, l'arbre intermédiaire peut présenter une souplesse intrinsèque permettant de tolérer des désalignements entre le premier arbre et le deuxième arbre de sorte à limiter les efforts parasites générés.

En outre, selon ce document FR 3057850, le dispositif de liaison peut comporter des moyens d'accouplement particuliers pour minimiser l'impact des désalignements axiaux, radiaux et angulaires. Ces moyens d'accouplement peuvent par exemple prendre la forme de diaphragmes ou de systèmes à plaques.

Selon un autre exemple, le document US 5286117 décrit un roulement dont la bague extérieure est asymétrique de sorte que son montage dans un logement cylindrique et autour d'un arbre permette la présence d'un jeu radial ou axial entre cette bague extérieure et le logement, uniquement sur une partie de la circonférence de cette bague extérieure. En conséquence, ce roulement permet de réduire les contraintes provoquées par un désalignement entre les bagues intérieure et extérieure du roulement afin de limiter les pics de charge sur les éléments roulants du roulement, ainsi que les autres pièces du système.

Des solutions alternatives existent. Par exemple, le document FR 2988789 décrit un dispositif de calage axial d'un roulement assemblé sur un arbre. Ce dispositif de calage axial comporte un moyen de calage angulaire et un jeu de fonctionnement autorisant un débattement angulaire limité du roulement.

Le document FR 522428 décrit un accouplement élastique entre des pignons et des arbres de commande appartenant à des transmissions dans lesquelles des roues dentées peuvent se déplacer l'une par rapport à l'autre.

Selon une technologie, le boîtier ou le carter d'un système de transmission peut être très rigide, pour limiter les amplitudes d'un désalignement des arbres. Bien qu'efficace, cette solution a un coût en termes de masse.

La présente invention a alors pour objet de proposer un système de transmission de puissance alternatif susceptible de minimiser la transmission d'efforts parasites, notamment entre un arbre menant et un arbre mené du système de transmission au cours de son fonctionnement.

Selon l'invention, un système de transmission comprend un arbre menant, un arbre mené et un dispositif de liaison reliant mécaniquement l'arbre menant et l'arbre mené, l'arbre menant entraînant en rotation l'arbre mené par l'intermédiaire du dispositif de liaison. De la sorte, le dispositif de liaison permet à l'arbre menant d'entraîner en rotation l'arbre mené, et par suite de transmettre un couple en rotation au moins de l'arbre menant vers l'arbre mené, voire également de l'arbre mené vers l'arbre menant.

Le système de transmission comporte également au moins deux premiers logements et au moins deux premiers dispositifs de guidage permettant de guider en rotation l'arbre menant autour d'un axe menant AXMA, chaque premier logement recevant un des premiers dispositifs de guidage. Le système de transmission comporte aussi au moins deux seconds logements et au moins deux seconds dispositifs de guidage permettant de guider en rotation l'arbre mené autour d'un axe mené AXME, chaque second logement recevant un des seconds dispositifs de guidage.

Le système de transmission peut encore comporter un carter dans lequel sont formés les premiers et seconds logements. Ce carter peut être monobloc ou composé de plusieurs sous-ensembles assemblés.

Le système de transmission selon l'invention est notamment remarquable en ce que l'axe menant AXMA et l'axe mené AXME sont désalignés lorsque le système de transmission est à l'arrêt, l'arbre menant ainsi que l'arbre mené et le dispositif de liaison étant situés autour d'une ligne médiane LM de l'axe menant AXMA et de l'axe mené AXME.

Cette ligne médiane LM est définie en étant, dans chaque plan perpendiculaire à cette ligne médiane LM, équidistante de l'axe menant AXMA et de l'axe mené AXME. L'arbre menant, l'arbre mené et le dispositif de liaison sont situés autour cette ligne médiane LM, et sont ainsi dans le prolongement les uns des autres, le dispositif de liaison étant situé entre l'arbre menant et l'arbre mené.

Les axes menant AXMA et mené AXME sont ainsi proches l'un de l'autre, mais sont non coaxiaux lorsque le système de transmission est à l'arrêt, à savoir lorsqu'aucun couple mécanique n'est transmis entre l'arbre menant et l'arbre mené. Un écart sépare alors l'axe menant AXMA et l'axe mené AXME.

De la sorte, lorsque le système de transmission transmet un couple mécanique, notamment de l'arbre menant vers l'arbre mené, des forces, désignées également par le terme « charges », conduisent à un rapprochement de l'axe menant AXMA et l'axe mené AXME par une réduction de l'écart les séparant. Ce rapprochement des axes menant AXMA et mené AXME peut aller notamment jusqu'à ce que l'axe menant AXMA et l'axe mené AXME soient sensiblement alignés et coaxiaux dans des conditions prédéterminées.

Le désalignement initial entre l'axe menant AXMA et l'axe mené AXME a ainsi pour but d'anticiper et de compenser les déformations et/ou déplacements sous charges, lors du fonctionnement du système de transmission.

Le rapprochement des axes menant AXMA et mené AXME permet en fonctionnement de limiter, voire d'éviter, l'apparition d'efforts parasites dans le système de transmission, voire en particulier au niveau des arbres menant et mené. La réduction voire l'absence de tels efforts parasites permet également de limiter les efforts subis par le dispositif de liaison et les dispositifs de guidage du système de transmission, ainsi que par des dispositifs de démultiplication de vitesse éventuels susceptibles d'être situés en amont de l'arbre menant et en aval de l'arbre mené.

La réduction, voire l'absence, de tels efforts parasites permet avantageusement d'améliorer le fonctionnement du système de transmission et d'augmenter sa durée de vie, réduisant de fait la fréquence des opérations de maintenance et/ou le remplacement de composants.

Le système de transmission selon l'invention peut permettre en outre d'obtenir un gain de masse par rapport aux solutions visant à rigidifier le système de transmission.

De manière surprenante, le désalignement au repos des axes menant AXMA et mené AXME est compatible avec le fonctionnement du système de transmission, notamment lors de son démarrage ou lorsqu'un faible couple mécanique est transmis par l'arbre menant vers l'arbre mené. En effet, le dispositif de liaison ainsi que les éventuels dispositifs de démultiplication de vitesse acceptent dans ces conditions un tel désalignement sans que leur fonctionnement en soit altéré.

Le procédé selon l'invention peut comporter une ou plusieurs des caractéristiques qui suivent, prises seules ou en combinaison.

Selon un exemple, le dispositif de liaison peut comporter au moins un dispositif d'entraînement permettant à l'arbre menant de transmettre un couple mécanique vers l'arbre mené.

Le dispositif de liaison et/ou un tel un dispositif d'entraînement peut ne comporter aucun dispositif de démultiplication de vitesse, de sorte que l'arbre menant et l'arbre mené tournent sensiblement à la même vitesse lorsque l'arbre menant transmet un couple mécanique vers l'arbre mené.

De plus, ledit au moins un dispositif d'entraînement peut être permanent, et fournir de façon similaire un couple mécanique de l'arbre menant vers l'arbre mené, ou de l'arbre mené vers l'arbre menant. Alternativement, ledit au moins un dispositif d'entraînement peut être non-permanent, et fournir en particulier un couple moteur uniquement de l'arbre menant vers l'arbre mené.

Ledit au moins un dispositif d'entraînement peut, par exemple, comporter un dispositif choisi parmi une liste comportant des cannelures, au moins une clavette, un ensemble boulonné, une roue libre, un embrayage, un moyen d'accouplement à diaphragmes.

Le dispositif de liaison peut comporter un arbre intermédiaire, ledit au moins un dispositif d'entraînement comportant un premier dispositif d'entraînement et un second dispositif d'entraînement, le premier dispositif d'entraînement transmettant un couple mécanique au moins de l'arbre menant vers l'arbre intermédiaire et le second dispositif d'entraînement transmettant un couple mécanique au moins de l'arbre intermédiaire vers l'arbre mené. Dans ce cas, l'arbre menant, l'arbre intermédiaire et l'arbre mené peuvent être sensiblement alignés et coaxiaux lorsque les axes menant AXMA et mené AXME se déplacent sous charges au cours du fonctionnement du système de transmission.

Selon un autre exemple compatible avec les précédents, l'axe menant AXMA et l'axe mené AXME peuvent être parallèles entre eux lorsque le système de transmission est à l'arrêt.

Alternativement, l'axe menant AXMA et l'axe mené AXME peuvent être inclinés l'un par rapport à l'autre, et de fait non parallèles entre eux, lorsque le système de transmission est à l'arrêt. L'écart séparant l'axe menant AXMA et l'axe mené AXME est dans ce cas un écart angulaire.

Selon un autre exemple compatible avec les précédents, chaque premier dispositif de guidage, agencé dans un premier logement, peut comporter un premier centre de rotation, autour duquel une première bague intérieure du premier dispositif de guidage tourne, par rapport à une première bague extérieure du premier dispositif de guidage. De façon similaire, chaque second dispositif de guidage, agencé dans un second logement, comporte un second centre de rotation, autour duquel une seconde bague intérieure du second dispositif de guidage tourne, par rapport à une seconde bague extérieure du second dispositif de guidage. Les premiers centres de rotation et les seconds centres de rotation sont, par exemple, situés respectivement sur des plans de symétrie des premiers et des seconds dispositifs de guidage.

L'axe menant AXMA passe alors par les premiers centres de rotation, et l'axe mené AXME passe par les seconds centres de rotation. L'axe menant AXMA est ainsi défini par les premiers centres de rotation et l'axe mené AXME est défini par les seconds centres de rotation.

La valeur de désalignement entre l'axe menant AXMA et l'axe mené AXME est alors définie par les positions relatives des premiers et seconds centres de rotation.

En particulier, si l'axe menant AXMA et l'axe mené AXME sont parallèles entre eux lorsque le système de transmission est à l'arrêt, les positions relatives des premiers centres de rotation respectivement par rapport aux seconds centres de rotation sont identiques.

De façon alternative, si l'axe menant AXMA et l'axe mené AXME ne sont pas parallèles entre eux lorsque le système de transmission est à l'arrêt, les positions relatives des premiers centres de rotation respectivement par rapport aux seconds centres de rotation sont différentes.

Selon une première variante du système de transmission selon l'invention, les premiers logements sont cylindriques et centrés sur l'axe menant AXMA, et les seconds logements sont cylindriques, et sont centrés sur l'axe mené AXME lorsque le système de transmission est à l'arrêt. Dans ce cas, les premiers logements et les seconds logements ne sont pas coaxiaux.

Le désalignement entre l'axe menant AXMA et l'axe mené AXME est ainsi obtenu directement à partir des positions relatives des premiers logements et des seconds logements. Dans ce cas, les premiers dispositifs de guidage et les seconds dispositifs de guidage comportent classiquement des bagues intérieures et extérieures coaxiales.

Selon une deuxième variante du système de transmission selon l'invention, les premiers logements et les seconds logements sont cylindriques, et sont coaxiaux lorsque le système de transmission est à l'arrêt, et au moins un des premiers dispositifs de guidage et des seconds dispositifs de guidage comporte une bague extérieure excentrée.

Cette bague extérieure excentrée comporte une surface périphérique extérieure et une surface périphérique intérieure qui sont excentrées l'une par rapport à l'autre et donc non coaxiales. Cette bague extérieure excentrée permet ainsi de déplacer le centre de rotation du dispositif de guidage concerné par rapport au centre du logement dans lequel est agencé le dispositif de guidage concerné. Par contre, la bague intérieure d'un dispositif de guidage est coaxiale avec la surface périphérique intérieure de la bague extérieure excentrée associée. En conséquence, la bague intérieure de ce dispositif de guidage et le logement dans lequel est agencé ce dispositif de guidage ne sont pas coaxiaux.

Le désalignement entre l'axe menant AXMA et l'axe mené AXME est ainsi obtenu par l'intermédiaire de la bague extérieure excentrée d'au moins un des premiers dispositifs de guidage et des seconds dispositifs de guidage. Par exemple, les deux premiers dispositifs de guidage comportent chacun une première bague extérieure excentrée, les seconds dispositifs de guidage comportant des secondes bagues intérieure et extérieure coaxiales.

Selon une troisième variante du système de transmission selon l'invention, les premiers logements et les seconds logements sont cylindriques, et sont coaxiaux lorsque le système de transmission est à l'arrêt, et au moins une bague excentrique est insérée entre d'une part un des premiers logements et seconds logements, et d'autre part un des premiers dispositifs de guidage et des seconds dispositifs de guidage.

Cette bague excentrique comporte une surface périphérique externe et une surface périphérique interne qui sont excentrées l'une par rapport à l'autre et donc non coaxiales. De la sorte, cette bague excentrique permet de déplacer le centre de rotation du dispositif de guidage autour duquel la bague excentrique est insérée, par rapport au centre du logement dans lequel la bague excentrique est insérée. En conséquence, le dispositif de guidage et le logement dans lequel est agencé ce dispositif de guidage ne sont pas coaxiaux.

Le désalignement entre l'axe menant AXMA et l'axe mené AXME est ainsi obtenu par l'intermédiaire de la ou des bagues excentriques. Par exemple, deux bagues excentriques sont insérées respectivement entre les premiers logements et les deux premiers dispositifs de guidage.

Selon une quatrième variante du système de transmission selon l'invention, le système de transmission comporte un carter composé de plusieurs sous-ensembles assemblés dont au moins un premier sous-ensemble et un second sous-ensemble, le premier sous-ensemble comportant lesdits au moins deux premiers logements et le second sous-ensemble comportant lesdits au moins deux seconds logements.

Le premier sous-ensemble et le second sous-ensemble sont fixés l'un à l'autre de sorte que l'axe menant AXMA et l'axe mené AXME soient désalignés lorsque le système de transmission est à l'arrêt.

Le premier sous-ensemble et le second sous-ensemble sont ainsi décalés l'un par rapport à l'autre, par rapport à une position dans laquelle l'axe menant AXMA et l'axe mené AXME seraient alignés lorsque le système de transmission est à l'arrêt. Dans ce cas, le premier sous-ensemble et le second sous-ensemble sont aussi décalés l'un par rapport à l'autre, par rapport à une position dans laquelle les premiers logements et les seconds logements sont coaxiaux lorsque le système de transmission est à l'arrêt, les premiers logements et les seconds logements étant cylindriques.

Le désalignement entre l'axe menant AXMA et l'axe mené AXME est ainsi obtenu par l'intermédiaire de ce décalage entre le premier sous-ensemble et le second sous-ensemble. Ce décalage peut être obtenu par les positions relatives des points de liaison entre le premier sous-ensemble et le second sous-ensemble, ou à l'aide d'une pièce intermédiaire adaptée au décalage souhaité.

Le premier sous-ensemble et le second sous-ensemble peuvent être fixés directement l'un à l'autre, ou par l'intermédiaire de la pièce intermédiaire, par exemple un troisième sous-ensemble du carter.

La présente invention vise également une boîte de transmission de puissance comportant un système de transmission tel que précédemment décrit.

La boîte de transmission de puissance peut, par exemple, être positionnée entre un moteur et un dispositif de propulsion, tel qu'un rotor si la boîte de transmission de puissance équipe un aéronef.

La présente invention vise encore un aéronef comportant un système de transmission tel que précédemment décrit, agencé ou non dans une boîte de transmission de puissance.

La présente invention vise enfin une méthode de limitation d'efforts parasites dans un système de transmission tel que précédemment décrit.

Cette méthode comporte notamment les étapes suivantes :
- détermination d'un déplacement relatif entre l'axe menant AXMA et l'axe mené AXME lors d'un fonctionnement du système de transmission, et
- désalignement, lorsque le système de transmission est à l'arrêt, de l'axe menant AXMA et de l'axe mené AXME en fonction de ce déplacement relatif.

Cette méthode permet ainsi de déterminer la valeur du désalignement à appliquer entre l'axe menant AXMA et l'axe mené AXME au repos. La valeur de ce désalignement peut être déterminée en fonction du déplacement relatif entre l'axe menant AXMA et l'axe mené AXME, déterminé lui-même par simulation et éventuellement confirmé par essais, ou déterminé directement par essais.

Lors de l'étape de détermination d'un déplacement relatif entre l'axe menant AXMA et l'axe mené AXME, le déplacement relatif entre l'axe menant AXMA et l'axe mené AXME peut être, par exemple, déterminé lorsque le système de transmission transmet un couple mécanique de l'arbre menant vers l'arbre mené supérieur ou égal à un couple prédéterminé. Ce couple prédéterminé peut, par exemple, correspondre à une phase particulière de fonctionnement du système de transmission, par exemple la phase de fonctionnement la plus pénalisante en termes d'efforts subis par le système de transmission, ou la plus utilisée.

Le déplacement relatif entre l'axe menant AXMA et l'axe mené AXME peut être alternativement déterminé comme étant égal à un déplacement relatif moyen des axes menant AXMA et mené AXME lorsque le système de transmission transmet un couple mécanique de l'arbre menant vers l'arbre mené qui est compris dans un intervalle prédéterminé. Cet intervalle prédéterminé peut, par exemple, correspondre à une ou plusieurs phases de fonctionnement du système de transmission, en particulier les phases de fonctionnement les plus pénalisantes en termes d'efforts subis et/ou les plus utilisées.

Le déplacement relatif entre l'axe menant AXMA et l'axe mené AXME peut être déterminé comme étant égal à un déplacement relatif moyen des axes menant AXMA et mené AXME lorsque le système de transmission est dans une ou des phases de fonctionnement prédéterminées, par exemple la ou les phases de fonctionnement les plus pénalisantes en termes d'efforts subis ou les plus utilisées.

Lorsque le système de transmission selon l'invention équipe un aéronef à voilure tournante, en étant par exemple positionné entre un moteur et un rotor de l'aéronef, les phases de vol de l'aéronef les plus pénalisantes peuvent être les phases de décollage, de vol de croisière, voire de vol stationnaire, la phase de vol la plus utilisée étant généralement le vol de croisière.

Toutefois, ce déplacement relatif entre l'axe menant AXMA et l'axe mené AXME sous charge peut s'avérer complexe à mesurer directement. Dans ce cas, lors d'essais et/ou de simulation, des efforts parasites, tels qu'un moment et/ou un effort tranchant, peuvent être mesurés dans certaines pièces du système de transmission, puis les positions relatives des axes menant AXMA et mené AXME à l'arrêt sont modifiées par itération pour amener à minimiser ces efforts parasites sous charge.

L'invention et ses avantages apparaîtront avec plus de détails dans le cadre de la description qui suit avec des exemples donnés à titre illustratif en référence aux figures annexées qui représentent :
- la figure 1, une vue d'un système de transmission selon l'invention intégré dans une boîte de transmission de puissance,
- la figure 2, une vue schématique d'un système de transmission selon l'invention,
- la figure 3, une vue schématique comparant un système de transmission selon l'invention à l'arrêt et en fonctionnement,
- la figure 4, une vue partielle d'un système de transmission selon l'invention,
- la figure 5, une vue partielle d'un système de transmission selon l'invention, et
- la figure 6, une vue d'un aéronef muni d'un système de transmission selon l'invention.

Les éléments présents dans plusieurs figures distinctes sont affectés d'une seule et même référence.

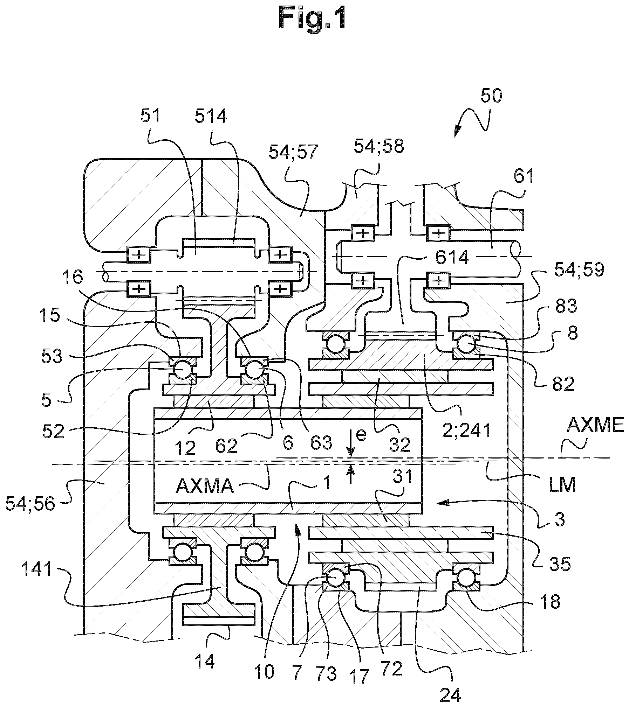

La figure 1 représente un système de transmission 10 destiné à transmettre un couple et une puissance mécanique entre un arbre menant 1 et un arbre mené 2. Ce système de transmission 10 peut par exemple être agencé entre un moteur et un dispositif de propulsion. Ce système de transmission 10 peut par exemple être intégré dans une boîte de transmission de puissance 50 visible partiellement sur la figure 1.

Quel que soit son agencement, le système de transmission 10 comporte un arbre menant 1, un arbre mené 2 et un dispositif de liaison 3 reliant mécaniquement l'arbre menant 1 et l'arbre mené 2. Le dispositif de liaison 3 solidarise au moins dans un sens de rotation l'arbre menant 1 et l'arbre mené 2 de sorte que l'arbre menant 1 entraîne en rotation au moins dans ce sens l'arbre mené 2 en lui transmettant un couple mécanique. Dans ce but, le dispositif de liaison 3 comporte au moins un dispositif d'entraînement 31,32.

Un dispositif d'entraînement 31,32 peut, par exemple, comporter une roue libre permettant de transmettre un couple mécanique de l'arbre menant 1 vers l'arbre mené 2 dans un unique sens de rotation.

Alternativement, un dispositif d'entraînement 31,32 peut comporter des cannelures agencées de façon complémentaire sur les arbres menant 1 et mené 2, au moins une clavette, ou encore un ensemble boulonné permettant de transmettre un couple mécanique de l'arbre menant 1 vers l'arbre mené 2 dans les deux sens de rotation. Un dispositif d'entraînement 31,32 peut aussi comporter un embrayage.

Le dispositif de liaison 3 peut aussi comporter selon l'exemple de système de transmission 10 de la figure 1, un arbre intermédiaire 35, un premier dispositif d'entraînement 31 et un second dispositif d'entraînement 32. Le premier dispositif d'entraînement 31 transmet un couple mécanique de l'arbre menant 1 vers l'arbre intermédiaire 35 et le second dispositif d'entraînement 32 transmet un couple mécanique de l'arbre intermédiaire 35 vers l'arbre mené 2. Selon l'exemple de système de transmission 10, le premier dispositif d'entraînement 31 comporte des cannelures et le second dispositif d'entraînement 32 comporte une roue libre.

Le système de transmission 10 comporte également au moins deux premiers logements 15,16 et au moins deux premiers dispositifs de guidage 5,6 respectifs permettant de guider en rotation l'arbre menant 1 autour d'un axe menant AXMA. Chaque premier logement 15,16 reçoit un des premiers dispositifs de guidage 5,6.

De plus, le système de transmission 10 comporte au moins deux seconds logements 17,18 et au moins deux seconds dispositifs de guidage 7,8 respectifs permettant de guider en rotation l'arbre mené 2 autour d'un axe mené AXME par rapport à un carter 54 de la boîte de transmission de puissance 50. Chaque second logement 17,18 reçoit un des seconds dispositifs de guidage 7,8.

Les premiers et seconds logements 15-18 peuvent être de forme cylindrique et agencés/formés dans le carter 54 de la boîte de transmission de puissance 50. Ce carter 54 peut comporter plusieurs sous-ensembles 56-59, comme représenté sur la figure 1, ces sous-ensembles 56-59 pouvant être assemblés entre eux à l'aide de vis par exemple.

Ainsi, selon l'exemple de système de transmission 10 représenté sur la figure 1, le système de transmission 10 comporte deux premiers logements 15,16, agencés respectivement dans deux sous-ensembles 56,57, et deux seconds logements 17,18, agencés respectivement dans deux sous-ensembles 58,59.

Par ailleurs, les dispositifs de guidage 5-8 comprennent, par exemple, des paliers comportant une bague intérieure 52,62,72,82 et une bague extérieure 53,63,73,83 encadrant des éléments roulants, à savoir des billes ou des rouleaux par exemple.

Chaque premier dispositif de guidage 5,6 comporte un premier centre de rotation, autour duquel est guidé en rotation l'arbre menant 1. L'axe menant AXMA passe ainsi par les premiers centres de rotation. De même, chaque second dispositif de guidage 7,8 comporte un second centre de rotation, autour duquel est guidé en rotation l'arbre mené 2. L'axe mené AXME passe ainsi par les seconds centres de rotation. L'axe menant AXMA est ainsi défini par les positions des premiers centres de rotation et l'axe mené AXME est défini par les positions des seconds centres de rotation.

L'arbre menant 1 et l'arbre mené 2 peuvent également comporter des dents 14,24 afin de coopérer respectivement avec un arbre d'entrée 51 et un arbre de sortie 61 de la boîte de transmission de puissance 50.

Selon un exemple, l'arbre menant 1 peut porter les dents 14, les premiers dispositifs de guidage 5,6 guidant l'arbre menant 1.

Selon l'exemple de système de transmission 10 de la figure 1, l'arbre menant 1 peut comporter une roue dentée menante 141 munie des dents 14. Cette roue dentée menante 141 est solidarisée en rotation à l'arbre menant 1 par un dispositif d'entraînement complémentaire 12. La roue dentée menante 141 est guidée en rotation directement ou indirectement par les premiers dispositifs de guidage 5,6. Eventuellement, les premiers dispositifs de guidage 5,6 guident l'arbre menant 1 en guidant la roue dentée menante 141. Cette roue dentée menante 141 coopère avec une roue dentée d'entrée 514 solidaire de l'arbre d'entrée 51. De la sorte, l'arbre menant 1 peut être mis en rotation par exemple par un moteur, via l'arbre d'entrée 51 et les roues dentées d'entrée 514 et menante 141.

De façon similaire, l'arbre mené 2 peut comporter une roue dentée menée 241 munie des dents 24 coopérant avec une roue dentée de sortie 614 solidaire en rotation de l'arbre de sortie 61. La roue dentée menée 241 est guidée en rotation directement ou indirectement par les seconds dispositifs de guidage 7,8. Selon l'exemple de la figure 1, l'arbre mené 2 et la roue dentée menée 241 forment une seule et même pièce.

De la sorte, lorsque l'arbre menant 1 transmet un couple mécanique en rotation à l'arbre mené 2, ce couple mécanique est transmis à l'arbre de sortie 61, éventuellement avec une démultiplication en fonction du nombre de dents 24 et du nombre de dents de la roue dentée de sortie 614. Un système du type de l'arbre menant à roue est envisageable.

Indépendamment de ces aspects, les axes menant AXMA et mené AXME sont désalignés, et donc ne sont pas coaxiaux, lorsque le système de transmission 10 est à l'arrêt. En effet, un écart sépare l'axe menant AXMA et l'axe mené AXME lorsque le système de transmission 10 est à l'arrêt ou ne transmet aucun couple de l'arbre menant 1 vers l'arbre mené 2. En outre, l'arbre menant 1 ainsi que l'arbre mené 2 et le dispositif de liaison 3 sont situés autour d'une ligne médiane LM qui est dans une position médiane entre l'axe menant AXMA et l'axe mené AXME.

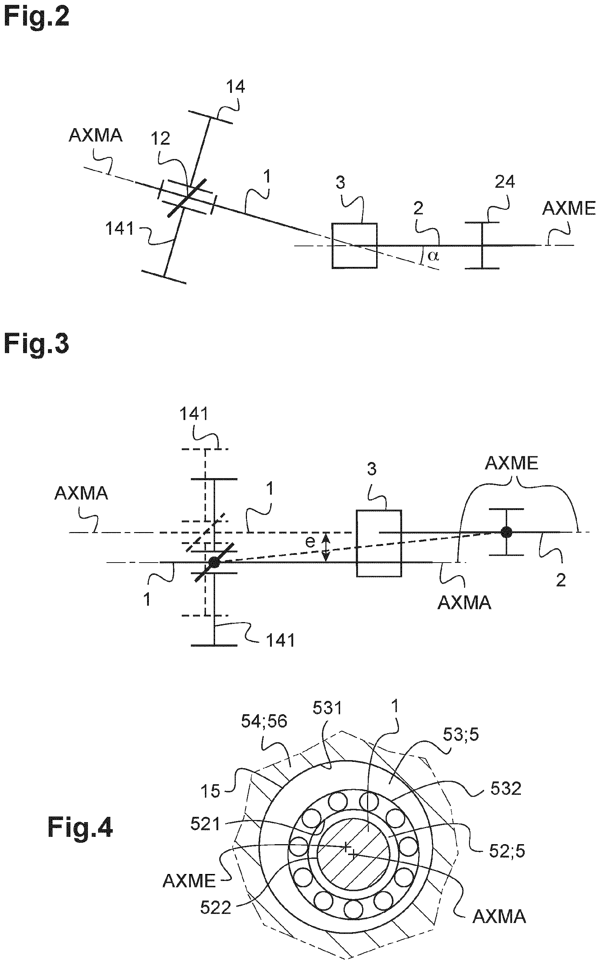

Cet écart peut prendre la forme d'une distance e, comme représenté sur la figure 1, l'axe menant AXMA et l'axe mené AXME étant parallèles entre eux. Cet écart peut prendre la forme d'un angle α, comme représenté sur la figure 2, l'axe menant AXMA et l'axe mené AXME étant alors inclinés l'un par rapport à l'autre, et donc non parallèles entre eux. Cette figure 2 représente schématiquement uniquement l'arbre menant 1, l'arbre mené 2 et le dispositif de liaison 3 ainsi que la roue dentée menante 141. Un tel désalignement entre les axes menant AXMA et mené AXME peut également être défini simultanément par une distance e et un angle α.

Sur les figures 1 et 2, l'écart entre les axes menant AXMA et mené AXME a été volontairement exagéré pour être clairement visible. La distance e est par exemple comprise entre 0,1 et 1 millimètre (0,1 et 1 mm). L'angle α est par exemple compris entre 0,1 et 1 degrés (0,1 et 1°).

La valeur de ce désalignement entre l'axe menant AXMA et l'axe mené AXME, qu'il soit exprimé en distance et/ou en angle, n'interdit pas le fonctionnement du système de transmission 10, notamment lors de son démarrage ou lorsqu'un faible couple est transmis par l'arbre menant 1 vers l'arbre mené 2. En effet, le dispositif de liaison 3 ainsi que les roues dentées d'entrée 514 et de sortie 524 autorisent un tel désalignement des axes menant AXMA et mené AXME, sans générer un effort parasite important tant que les couples transmis restent faibles.

Avantageusement, dès que le couple transmis par le système de transmission 10, et en particulier de l'arbre menant 1 vers l'arbre mené 2, augmente, des déformations et/ou des déplacements se produisent dans le système de transmission 10 selon l'invention, en particulier au niveau de l'arbre menant 1 et/ou de l'arbre mené 2. Ces déformations et/ou des déplacements tendent à déplacer/déformer l'arbre menant 1 et/ou l'arbre mené 2 de sorte à réduire le désalignement entre les axes menant AXMA et mené AXME, ces axes menant AXMA et mené AXME se rapprochant avantageusement l'un de l'autre, éventuellement jusqu'à être coaxiaux et alignés.

Ainsi, lorsque le couple transmis par le système de transmission 10 augmente, le désalignement des axes menant AXMA et mené AXME se réduit ce qui a pour effet de limiter l'apparition d'efforts parasites dans le système de transmission 10, et de limiter les effets de ces efforts parasites sur le système de transmission 10 et ses composants, tels que les dispositifs de guidage 5-8, le carter 54, le ou les dispositifs d'entraînement 31,32 et les dents 14,24, ainsi les roues dentées d'entrée 514 et de sortie 524 éventuelles. Par suite, ces composants sont moins sollicités ce qui permet de limiter les opérations de maintenance et en conséquence le coût d'utilisation du système de transmission 10 selon l'invention.

La figure 3 représente de façon schématique, le système de transmission 10 à l'arrêt et en fonctionnement. L'arbre menant 1 et la roue dentée menante 141 sont représentés en traits continus pour le système de transmission 10 à l'arrêt, et avec des pointillés pour le système de transmission 10 en fonctionnement. L'arbre mené 2 et le dispositif de liaison 3 sont inchangés que le système de transmission 10 soit à l'arrêt ou en fonctionnement.

Lorsque le système de transmission 10 est à l'arrêt, l'arbre menant 1, représenté en trait continu, et l'arbre mené 2 ne sont pas coaxiaux, les axes menant AXMA et mené AXME étant parallèles entre eux.

Lorsque le système de transmission 10 fonctionne, les efforts subis sont tels que l'arbre menant 1, représenté en pointillés, et l'arbre mené 2 deviennent sensiblement coaxiaux et alignés, les axes menant AXMA et mené AXME étant également sensiblement alignés.

Pour obtenir un tel fonctionnement sous charges du système de transmission 10, le désalignement entre les axes menant AXMA et mené AXME a été défini en fonction des déplacements relatifs sous charges des axes menant AXMA et mené AXME lors du fonctionnement de ce système de transmission 10. Ces déplacements des axes menant AXMA et mené AXME ont pu être déterminés par simulations et/ou essais.

Une méthode de limitation d'efforts parasites dans le système de transmission 10 peut permettre de déterminer la valeur de ce désalignement initial.

Cette méthode comporte tout d'abord une étape de détermination d'un déplacement relatif entre l'axe menant AXMA et l'axe mené AXME lors d'un fonctionnement du système de transmission 10. La valeur de ce déplacement relatif peut être déterminée par simulation, et/ou essais.

Ce déplacement relatif entre l'axe menant AXMA et l'axe mené AXME peut être par exemple déterminé lorsque le système de transmission 10 est dans une ou plusieurs phases de fonctionnement particulières du système de transmission 10. Cette ou ces phases de fonctionnement particulières peuvent, par exemple, comporter la ou les phases de fonctionnement les plus pénalisantes en termes d'efforts subis, et/ou les plus utilisées.

Selon un premier exemple, ce déplacement relatif peut être, par exemple, déterminé lorsque le système de transmission 10 transmet un couple mécanique de l'arbre menant 1 vers l'arbre mené 2 supérieur ou égal à un couple prédéterminé.

Selon un deuxième exemple, ce déplacement relatif peut être déterminé comme étant égal à un déplacement relatif moyen entre les axes menant AXMA et mené AXME lorsque le système de transmission 10 transmet un couple mécanique de l'arbre menant 1 vers l'arbre mené 2 compris dans un intervalle prédéterminé.

Selon un troisième exemple, ce déplacement relatif peut être déterminé comme étant égal à un déplacement relatif moyen entre les axes menant AXMA et mené AXME lorsque le système de transmission 10 fonctionne selon la ou les phases de fonctionnement les plus pénalisantes en termes d'efforts subis ou les plus utilisées.

Ensuite, cette méthode comporte une étape de désalignement de l'axe menant AXMA et de l'axe mené AXME en fonction de ce déplacement relatif lorsque le système de transmission 10 est à l'arrêt.

Cette méthode permet ainsi de déterminer la valeur du désalignement à appliquer entre l'axe menant AXMA et l'axe mené AXME au repos. Par exemple, ce désalignement est égal à la valeur du déplacement relatif précédemment déterminée.

Pour obtenir ce désalignement des axes menant AXMA et mené AXME, le premier centre de rotation d'au moins un des premiers dispositifs de guidage 5,6 et/ou le second centre de rotation d'au moins un des seconds dispositifs de guidage 7,8 est décalé par rapport à une position théorique dans laquelle les axes menant AXMA et mené AXME sont coaxiaux et alignés. Ce décalage d'un premier ou second centre de rotation peut être réalisé uniquement radialement par rapport à l'axe menant AXMA ou l'axe mené AXME, à savoir dans un plan passant par cette position théorique et perpendiculaire à l'axe menant AXMA ou à l'axe mené AXME. Ce décalage du premier ou second centre de rotation peut aussi combiner un tel décalage radial et un décalage axial, parallèlement à l'axe menant AXMA ou à l'axe mené AXME.

Le centre de rotation d'un seul des premiers et seconds dispositifs de guidage 5-8 peut être décalé pour obtenir le désalignement recherché entre les axes menant AXMA et mené AXME, notamment lorsque les axes menant AXMA et mené AXME ne sont pas parallèles entre eux quand le système de transmission 10 est à l'arrêt.

Les premiers centres de rotation de tous les premiers dispositifs de guidage 5,6 ou les seconds centres de rotation de tous les seconds dispositifs de guidage 7,8 peuvent être décalés pour obtenir l'écart recherché entre les axes menant AXMA et mené AXME. Les décalages seront les mêmes pour chacun des premiers dispositifs de guidage 5,6 ou des seconds dispositifs de guidage 7,8 si les axes menant AXMA et mené AXME sont parallèles entre eux lorsque le système de transmission 10 est à l'arrêt. Les décalages seront différents pour chacun des premiers dispositifs de guidage 5,6 ou des seconds dispositifs de guidage 7,8 si les axes menant AXMA et mené AXME ne sont pas parallèles entre eux lorsque le système de transmission 10 est à l'arrêt.

Que les axes menant AXMA et mené AXME soit parallèles ou non, les premiers centres de rotation de tous les premiers dispositifs de guidage 5,6 et les seconds centres de rotation de tous les seconds dispositifs de guidage 7,8 peuvent également être décalés.

Plusieurs solutions techniques sont envisageables pour obtenir le décalage recherché d'un centre de rotation d'un des dispositifs de guidage 5-8.

Selon une première variante, le décalage du premier ou second centre de rotation d'un ou de plusieurs des premiers dispositifs de guidage 5,6 et/ou seconds dispositifs de guidage 7,8 peut être obtenu grâce à la position des premiers logements 15,16 et/ou des seconds logements 17,18 correspondants. Dans ce cas, les premiers logements 15,16 et les seconds logements 17,18 ne sont pas coaxiaux lorsque le système de transmission 10 est à l'arrêt, comme représenté sur la figure 1. Les premiers logements 15,16 sont dans ce cas centrés sur l'axe menant AXMA et les seconds logements 17,18 sont centrés sur l'axe mené AXME. Ce décalage du premier ou second centre de rotation d'un ou de plusieurs des dispositifs de guidage 5-8 est, par exemple, obtenu par usinage du ou des logements 15-18 correspondants dans le carter 54.

Selon une deuxième variante, le décalage du premier ou second centre de rotation d'un ou de plusieurs des premiers dispositifs de guidage 5,6 et/ou seconds dispositifs de guidage 7,8 peut être obtenu grâce au ou aux dispositifs de guidage 5-8 concernés. Dans ce cas, tous les premiers logements 15,16 et les seconds logements 17,18 sont coaxiaux lorsque le système de transmission 10 est à l'arrêt. Par contre, le ou les premiers ou seconds dispositifs de guidage 5-8 concernés sont excentrés, à savoir que leur premier ou second centre de rotation est excentré par rapport au centre du logement 15-18 dans lequel ce dispositif de guidage 5-8 est positionné.

Par exemple, la figure 4 représente un premier logement 15 et un premier dispositif de guidage 5 selon cette seconde variante. Le premier logement 15 est coaxial avec les autres premiers et seconds logements 16-18 et centré par exemple sur l'axe mené AXME. Le premier dispositif de guidage 5 comporte une bague extérieure 53 excentrée et une bague intérieure 52 « classique », à savoir annulaire. La surface périphérique extérieure 531 de cette bague extérieure 53 excentrée est centrée sur l'axe mené AXME alors que la surface périphérique intérieure 532 de cette bague extérieure 53 excentrée est centrée sur l'axe menant AXMA. Ces surfaces périphériques extérieure 531 et intérieure 532 sont alors excentrées et donc non coaxiales. A contrario, la bague intérieure 52 « classique » comporte des surfaces périphériques intérieure 522 et extérieure 521 qui sont coaxiales. L'excentration de la bague extérieure 53 excentrée est égale au décalage recherché du premier centre de rotation de ce premier dispositif de guidage 5.

Selon une troisième variante, le décalage du premier ou second centre de rotation d'un ou de plusieurs des premiers dispositifs de guidage 5,6 et/ou seconds dispositifs de guidage 7,8 peut être obtenu à l'aide d'une bague excentrique 9 insérée entre le logement 15-18 et le dispositif de guidage 5-8 concernés. Dans ce cas, tous les premiers logements 15,16 et les seconds logements 17,18 sont coaxiaux lorsque le système de transmission 10 est à l'arrêt. Les premiers logements 15,16 et les seconds logements 17,18, et d'autre part un des premiers dispositifs de guidage 5,6 et des seconds dispositifs de guidage 7,8 sont, selon cette troisième variante, « classique » à savoir que leurs bagues intérieures 52,62,72,82 et extérieures 53,63,73,83 sont respectivement coaxiales deux à deux.

La bague excentrique 9 comporte deux surfaces périphériques circulaires externe 91 et interne 92 qui sont excentrées l'une par rapport à l'autre, à savoir que leurs centres respectifs ne sont pas coaxiaux.

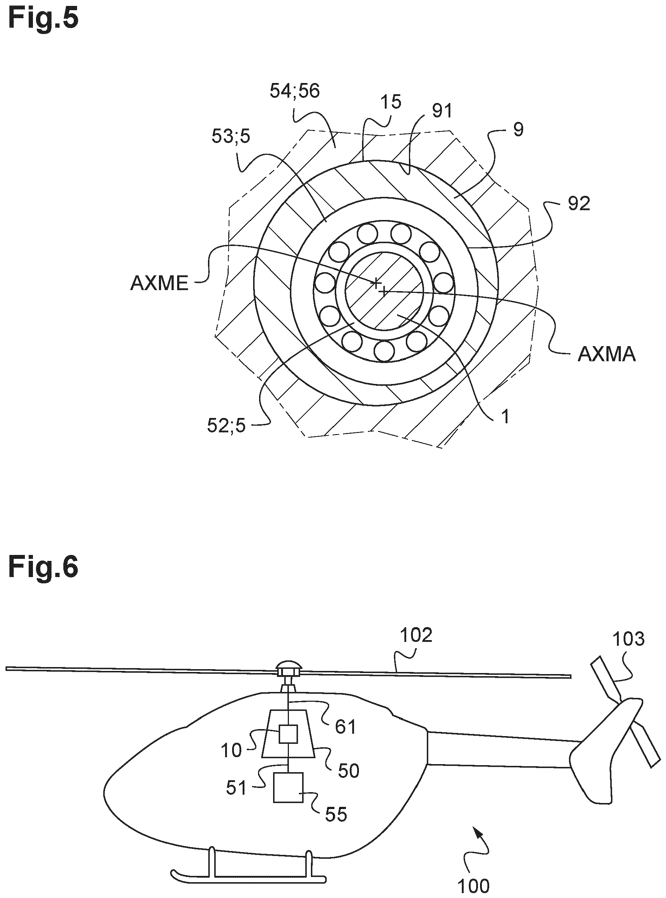

Un exemple d'une troisième variante est représenté sur la figure 5, dans laquelle une telle bague excentrique 9 est positionnée dans un premier logement 15 et autour d'un premier dispositif de guidage 5. Le premier logement 15 est coaxial avec les autres premiers et seconds logements 16-18 et centré par exemple sur l'axe mené AXME. La surface périphérique externe 91 de la bague excentrique 9 est centrée sur l'axe mené AXME alors que la surface périphérique interne 92 de cette bague excentrique 9 est centrée sur l'axe menant AXMA. Les surfaces périphériques externe 91 et interne 92 sont ainsi excentrées et donc non coaxiales. L'excentration de la bague excentrique 9 est égale au décalage recherché du premier centre de rotation de ce premier dispositif de guidage 5.

Selon une quatrième variante, le système de transmission 10 peut comporter un carter 54 muni au moins d'un premier sous-ensemble 57 et d'un second sous-ensemble 58. Le premier sous-ensemble 57 comporte lesdits au moins deux premiers logements 15,16 et le second sous-ensemble 58 comporte lesdits au moins deux seconds logements 17,18.

Le premier sous-ensemble 57 et le second sous-ensemble 58 sont fixés l'un à l'autre afin que l'axe menant AXMA et l'axe mené AXME soient désalignés lorsque le système de transmission 10 est à l'arrêt. Un exemple d'une quatrième variante est représenté sur la figure 1.

Le premier sous-ensemble 57 et le second sous-ensemble 58 sont ainsi décalés l'un par rapport à l'autre, par rapport à une position dans laquelle l'axe menant AXMA et l'axe mené AXME seraient alignés lorsque le système de transmission 10 est à l'arrêt. Par exemple, le premier sous-ensemble 57 et le second sous-ensemble 58 sont décalés l'un par rapport à l'autre, par rapport à une position dans laquelle les premiers logements 15,16 et les seconds logements 17,18 sont coaxiaux lorsque le système de transmission 10 est à l'arrêt. En conséquence, suite à ce décalage, les premiers logements 15,16 et les seconds logements 17,18 ne sont pas coaxiaux lorsque le système de transmission 10 est à l'arrêt.

Le système de transmission 10 peut équiper un aéronef 100, et en particulier une boîte de transmission de puissance 50 de cet aéronef 100, comme représenté sur la figure 6. La boîte de transmission de puissance 50 permet à un moteur 55 d'entraîner en rotation un rotor de sustentation 102. L'aéronef 100 peut également comporter un rotor auxiliaire 103 susceptible d'être entraîné en rotation par le moteur 55, via la boîte de transmission de puissance 50 par exemple. La boîte de transmission de puissance 50 comporte un arbre d'entrée 51 relié mécaniquement au moteur 55 et un arbre de sortie 61 relié mécaniquement au rotor de sustentation 102.

Lorsque le système de transmission 10 équipe un tel aéronef 100, les phases de fonctionnement particulières du système de transmission 10, utilisées notamment pour déterminer le déplacement relatif entre les axes menant AXMA et mené AXME, peuvent être associées à des phases de vol de l'aéronef 100, en particulier les phases de vol les plus pénalisantes, qui peuvent être les phases de décollage, de vol de croisière, voire de vol stationnaire, et la phase de vol la plus utilisée qui est généralement le vol de croisière.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Système de transmission (10) comprenant un arbre menant (1) ainsi qu'un arbre mené (2) et un dispositif de liaison (3) reliant mécaniquement ledit arbre menant (1) et ledit arbre mené (2), ledit arbre menant (1) entraînant en rotation ledit arbre mené (2) par l'intermédiaire dudit dispositif de liaison (3), ledit système de transmission (10) comportant au moins deux premiers logements (15,16) et au moins deux premiers dispositifs de guidage (5,6) guidant en rotation ledit arbre menant (1) autour d'un axe menant (AXMA), chaque premier logement (15,16) recevant un desdits premiers dispositifs de guidage (5,6), ledit système de transmission (10) comportant au moins deux seconds logements (17,18) et au moins deux seconds dispositifs de guidage (7,8) guidant en rotation ledit arbre mené (2) autour d'un axe mené (AXME), chaque second logement (17,18) recevant un desdits seconds dispositifs de guidage (7,8),
**caractérisé en ce que** ledit axe menant (AXMA) et ledit axe mené (AXME) sont désalignés lorsque ledit système de transmission (10) est à l'arrêt, ledit arbre menant (1) ainsi que ledit arbre mené (2) et ledit dispositif de liaison (3) étant situés autour d'une ligne médiane (LM) dudit axe menant (AXMA) et dudit axe mené (AXME).

2. Système de transmission (10) selon la revendication 1,
dans lequel ledit dispositif de liaison (3) comporte au moins un dispositif d'entraînement (31,32) permettant audit arbre menant (1) de transmettre un couple mécanique vers ledit arbre mené (2).

3. Système de transmission (10) selon la revendication 2,
dans lequel ledit dispositif de liaison (3) comporte un arbre intermédiaire (35), ledit au moins un dispositif d'entraînement (31,32) comportant un premier dispositif d'entraînement (31) et un second dispositif d'entraînement (32), ledit premier dispositif d'entraînement (31) transmettant un couple mécanique dudit arbre menant (1) vers ledit arbre intermédiaire (35) et ledit second dispositif d'entraînement (31,32) transmettant un couple mécanique dudit arbre intermédiaire (35) vers ledit arbre mené (2).

4. Système de transmission (10) selon l'une quelconque des revendications 2 à 3,
dans lequel ledit au moins un dispositif d'entraînement (31,32) comporte un dispositif choisi parmi une liste comportant des cannelures, au moins une clavette, un ensemble boulonné, une roue libre, un embrayage.

5. Système de transmission (10) selon l'une quelconque des revendications 1 à 4,
dans lequel ledit axe menant (AXMA) et ledit axe mené (AXME) sont parallèles entre eux lorsque ledit système de transmission (10) est à l'arrêt.

6. Système de transmission (10) selon l'une quelconque des revendications 1 à 4,
dans lequel ledit axe menant (AXMA) et ledit axe mené (AXME) sont inclinés l'un par rapport à l'autre lorsque ledit système de transmission (10) est à l'arrêt.

7. Système de transmission (10) selon l'une quelconque des revendications 1 à 6,
dans lequel chaque premier dispositif de guidage (5,6) comporte un premier centre de rotation autour duquel une première bague intérieure (52,62) dudit premier dispositif de guidage (5,6) tourne par rapport à une première bague extérieure (53,63) dudit premier dispositif de guidage (5,6), chaque second dispositif de guidage (7,8) comporte un second centre de rotation autour duquel une seconde bague intérieure (72,82) dudit second dispositif de guidage (7,8) tourne par rapport à une seconde bague extérieure (73,83) dudit second dispositif de guidage (7,8), ledit axe menant (AXMA) passant par lesdits premiers centres de rotation, ledit axe mené (AXME) passant par lesdits seconds centres de rotation.

8. Système de transmission (10) selon l'une quelconque des revendications 1 à 6,
dans lequel lesdits premiers logements (15,16) et lesdits seconds logements (17,18) sont cylindriques et sont coaxiaux lorsque ledit système de transmission (10) est à l'arrêt, et au moins un desdits premiers dispositifs de guidage (5,6) et desdits seconds dispositifs de guidage (7,8) comporte une bague extérieure (53,63,73,83) excentrée, ladite bague extérieure (53,63,73,83) excentrée comportant une surface périphérique extérieure et une surface périphérique intérieure qui sont excentrées l'une par rapport à l'autre.

9. Système de transmission (10) selon l'une quelconque des revendications 1 à 7,
dans lequel lesdits premiers logements (15,16) et lesdits seconds logements (17,18) sont cylindriques et sont coaxiaux lorsque ledit système de transmission (10) est à l'arrêt, et ledit système de transmission (10) comporte au moins une bague excentrique (9) insérée entre d'une part un desdits premiers logements (15,16) et desdits seconds logements (17,18), et d'autre part un desdits premiers dispositifs de guidage (5,6) et desdits seconds dispositifs de guidage (7,8), ladite bague excentrique (9) comportant une surface périphérique externe (91) et une surface périphérique interne (92) qui sont excentrées l'une par rapport à l'autre.

10. Système de transmission (10) selon l'une quelconque des revendications 1 à 7,
dans lequel lesdits premiers logements (15,16) et lesdits seconds logements (17,18) étant cylindriques, lesdits premiers logements (15,16) sont centrés sur ledit axe menant (AXMA) et lesdits seconds logements (17,18) sont centrés sur ledit axe mené (AXME) lorsque ledit système de transmission (10) est à l'arrêt.

11. Système de transmission (10) selon l'une quelconque des revendications 1 à 7,
dans lequel ledit système de transmission (10) comporte un carter (54) composé de plusieurs sous-ensembles (56-59) assemblés dont au moins un premier sous-ensemble (57) et un second sous-ensemble (58), ledit premier sous-ensemble (57) comportant lesdits au moins deux premiers logements (15,16) et ledit second sous-ensemble (58) comportant lesdits au moins deux seconds logements (17,18), et ledit premier sous-ensemble (57) et ledit second sous-ensemble (58) sont fixés l'un à l'autre de sorte que ledit axe menant (AXMA) et ledit axe mené (AXME) soient désalignés lorsque ledit système de transmission (10) est à l'arrêt, ledit premier sous-ensemble et ledit second sous-ensemble étant décalés l'un par rapport à l'autre, par rapport à une position dans laquelle ledit axe menant (AXMA) et ledit axe mené (AXME) seraient alignés lorsque ledit système de transmission (10) est à l'arrêt.

12. Boîte de transmission de puissance (50) comportant un système de transmission (10) selon l'une quelconque des revendications 1 à 11.

13. Aéronef (100) comportant un système de transmission (10) mécanique de puissance selon l'une quelconque des revendications 1 à 11.

14. Méthode de limitation d'efforts parasites dans un système de transmission (10) selon l'une des revendications 1 à 11,
ladite méthode comportant les étapes suivantes :
- détermination d'un déplacement relatif entre ledit axe menant (AXMA) et ledit axe mené (AXME) lors d'un fonctionnement dudit système mécanique (10),
- désalignement, lorsque ledit système de transmission est à l'arrêt, dudit axe menant (AXMA) et dudit axe mené (AXME) en fonction dudit déplacement relatif.

15. Méthode selon la revendication 14,
dans laquelle, lors de ladite détermination d'un déplacement relatif entre ledit axe menant (AXMA) et ledit axe mené (AXME), ledit déplacement relatif entre ledit axe menant (AXMA) et ledit axe mené (AXME) est déterminé lorsque ledit système de transmission (10) transmet un couple mécanique dudit arbre menant (1) vers ledit arbre mené (2) supérieur ou égal à un couple prédéterminé.

16. Méthode selon la revendication 14,
dans laquelle, lors de ladite détermination d'un déplacement relatif entre ledit axe menant (AXMA) et ledit axe mené (AXME), ledit déplacement relatif entre ledit axe menant (AXMA) et ledit axe mené (AXME) est égal à un déplacement relatif moyen desdits axes menant (AXMA) et mené (AXME) lorsque ledit système de transmission (10) transmet un couple mécanique dudit arbre menant (1) vers ledit arbre mené (2) compris dans un intervalle prédéterminé.

17. Méthode selon la revendication 14,
dans laquelle, lors de ladite détermination, ledit déplacement relatif entre ledit axe menant (AXMA) et ledit axe mené (AXME) est égal à un déplacement relatif moyen desdits axes menant (AXMA) et mené (AXME) lorsque ledit système de transmission (10) est dans une ou des phases de fonctionnement prédéterminées.
